# EUROPÄISCHE PATENTSCHRIFT

(11) **EP 0 953 777 B1**
(45) Veröffentlichungstag und Bekanntmachung des Hinweises auf die Patenterteilung: **10.01.2007**
(21) Anmeldenummer: 99810216.4
(22) Anmeldetag: 11.03.1999
(51) Int. Cl.: F16B 13/06

(54) **Dübel**
Dowel
Cheville

(30) Priorität: 02.05.1998 DE 19819724
(43) Veröffentlichungstag der Anmeldung: 03.11.1999
(73) Patentinhaber: HILTI Aktiengesellschaft, 9494 Schaan (LI)
(72) Erfinder: Kaibach, Werner, 86807 Buchloe (DE); Raber, Stefan, 86916 Kaufering (DE); Negele, Hans-Jürgen, 86920 Denklingen (DE); Kölbl, Alois, 86807 Buchloe (DE); Genschmer, Ulrich, 86928 Hofstetten (DE)
(74) Vertreter: Wildi, Roland

(56) Entgegenhaltungen:
- EP-A- 0 059 825
- EP-A- 0 104 723
- DE-A- 3 914 072
- GB-A- 2 234 568
- US-A- 4 818 163

## Beschreibung

Die Erfindung betrifft einen Dübel mit einer Ankerstange und einer unter Aufspreizen eines Spreizbereichs relativ zur Ankerstange verschiebbaren Hülse gemäss dem Oberbegriff des Patentanspruchs 1.

Bei einer Art der gattungsgemässen Dübel basiert das Verankerungsprinzip im wesentlichen auf einem Kraftschluss der Aussenfläche des gegen die Wand eines Bohrlochs gepressten Spreizbereichs der Hülse, wie es beispielsweise von den Spreizankem des Stands der Technik hinlänglich bekannt ist. Bei einer weiteren Art von gattungsgemässen Dübeln beruht die Verankerung auf einem Formschluss, den radial ausstellbare Spreizlappen des Spreizbereichs der Hülse in einer Hinterschneidung bilden, die im grundnahen Bereich des Bohrlochs erzeugt ist. Derartige Dübel sind aus dem Stand der Technik als Hinterschnittdübel bzw. Hinterschnittanker bekannt. Beide Arten von Dübeln umfassen eine Ankerstange mit einem sich in Einsteckrichtung erweitemden Kopfteil. Im rückwärtigen Bereich der Ankerstange ist meist ein Aussengewinde als Lastangriffsmittel vorgesehen. Eine Hülse mit einer axialen Durchgangsbohrung ist auf die Ankerstange aufgesteckt und relativ zur Ankerstange verschiebbar. Der dem Kopfteil der Ankerstange zugewandte Abschnitt der Hülse bildet den Spreizbereich, der durch üblicherweise axial verlaufende Schlitze voneinander getrennte Spreizlappen aufweist. Durch Auftreiben der Hülse auf das sich in Setzrichtung meist konusförmig erweitemde Kopfteil werden die Spreizlappen radial ausgestellt und wird durch Kraft- und/oder Formschluss die Verankerung im Bohrloch erzielt.

Die Ankerstange der bekannten Dübel ist üblicherweise über einen wesentlichen Teil ihrer Längserstreckung innerhalb des Bohrlochs von der Hülse umgeben. Aufgabe der Hülse ist es nicht nur, durch eine Relativverschiebung zur Ankerstange eine radiale Aufweitung ihres Spreizbereichs und die Verankerung im Bohrloch zu gewährleisten. Die Hülse soll auch die bei statischer und dynamischer Belastung auftretenden Querkräfte in Richtung der Bohrlochwand ableiten. Es sind auch Hinterschnittdübel bzw. -anker bekannt, bei denen der Spreizbereich an einer verhältnismässig kurzen vorderen Hülse vorgesehen ist, an die eine zweite Hülse anschliesst, die sich etwa bis zur Bohrlochmündung erstreckt. Die zweite Hülse dient wiederum zur Übertragung der bei statischer und dynamischer Belastung auftretenden Querkräfte an die Bohrlochwand.

Bohrlöcher weichen oftmals von der theoretisch beim Bohren erwarteten zylindrischen Form ab. Meist besitzt das Bohrloch eine leicht konische Kontur mit einem grösseren Durchmesser an der Bohrlochmündung als am Bohrlochgrund. Bei Betonarten mit besonders harten Zuschlagstoffen, beispielsweise in französischem und englischem Flintbeton, besteht bei der Bohrlocherstellung die Gefahr, dass der Bohrer beim Auftreffen auf ein solches hartes Kom vorübergehend aus seiner Symmetrielinie ausgelenkt wird. Dadurch kann ein Bohrloch entstehen, das abgesehen von der Konizität auch eine leicht gekrümmte Kontur aufweist. Die Hülsen der bekannten Spreizanker und Hinterschnittdübel bzw. -anker liegen in derartigen Bohrlöchem nur sehr ungleichmässig an der Bohrlochwand an. Bei einer zylindrischen Aussenkontur der Hülse muss ihr Aussendurchmesser auf den Durchmesser des Bohrlochs im Bohrlochtiefsten abgestimmt sein, da ansonsten beim Einsetzen des Dübels in das Bohrloch Schwierigkeiten auftreten können. Dadurch weist die Hülse über einen grossen Teil ihrer Längserstreckung gegenüber der Bohrlochwand ein relativ grosses Spiel auf und sie liegt nur unzureichend an der Bohrlochwand an. Dies verschlechtert die Übertragung von bei der Belastung auftretenden Querkräften auf die Bohrlochwand und wirkt sich negativ auf die Dynamiktauglichkeit des Dübels auf. Eine krumme Bohrlochkontur kann beim Setzen des Dübels zu erhöhten Eintreibkräften führen. Insbesondere bei Hinterschnittdübeln bzw. Hinterschnittankern, die mit rotierender Hülse eingetrieben werden, damit die beim Vortreiben der Hülse radial ausgestellten Spreizlappen sich beim Setzvorgang selbsttätig eine Hinterschneidung erzeugen, können dabei zwischen der Aussenwand der Hülse und der Bohrlochwand erhöhte Reibungsverluste auftreten. Die daraus resultierenden erhöhten Eintreibkräfte wirken sich negativ auf die Setzgeschwindigkeiten aus und können in Einzelfällen sogar dazu führen, dass der Dübel nur unvollständig verankert wird.

Aus der EP 0 059 825 A1 ist ein Dübel bekannt, der eine Ankerstange mit einem sich in Setzrichtung erweitemden Kopfteil und eine mit einer axialen Durchgangsbohrung versehenen Hülse umfasst. Die Hülse weist an ihrem dem Kopfteil zugewandten Ende einen Spreizbereich mit Spreizlappen auf, die durch im wesentlichen axial verlaufende Schlitze voneinander getrennt und durch Relativverschieben der Hülse und der Ankerstange radial ausstellbar sind. An den Spreizbereich schliesst sich ein Hülsenabschnitt an, wobei zwischen seinem rückwärtigen Endbereich und seinem an den Spreizbereich angrenzenden vorderen Endbereich ein mittlerer Hülsenbereich vorgesehen ist, der verjüngt ausgebildet ist und einen geringsten Aussendurchmesser besitzt, der kleiner ist als der Aussendurchmesser im vorderen Endbereich.

Aufgabe der vorliegenden Erfindung ist es daher, diesen Nachteilen der gattungsgemäßen Dübel des Stands der Technik abzuhelfen.. Es soll ein Dübel geschaffen werden, der eine hohe Dynamiktauglichkeit aufweist. Erhöhte Reibungsverluste und grosse Eintreibkräfte sollen vermieden werden. Der Dübel soll einfach, schnell und zuverlässig im Untergrund verankerbar sein.

Die Lösung dieser Aufgaben besteht in einem Dübel mit den im kennzeichnenden Abschnitt des Patentanspruchs 1 angeführten Merkmalen. Der erfindungsgemässe Dübel umfasst eine Ankerstange mit einem sich in Setzrichtung erweiternden Kopfteil und eine mit einer axialen Durchgangsbohrung versehenen Hülse, die an ihrem dem Kopfteil zugewandten Ende einen Spreizbereich mit Spreizlappen aufweist, die durch im wesentlichen axial verlaufende Schlitze voneinander getrennt und durch Relativverschieben der Hülse und der Ankerstange radial ausstellbar sind. An den Spreizbereich schliesst ein Hülsenabschnitt an, der an seinem rückwärtigen Endbereich einen grösseren Aussendurchmesser aufweist als an seinem an den Spreizbereich angrenzenden vorderen Endbereich. Zwischen dem rückwärtigen Endbereich und dem vorderen Endbereich des Hülsenabschnitts ist ein mittlerer Hülsenbereich vorgesehen, der verjüngt ausgebildet ist und einen geringsten Aussendurchmesser besitzt, der kleiner ist als der Aussendurchmesser im vorderen Endbereich.

Der erfindungsgemässe Dübel besitzt einen Hülsenabschnitt, der im rückwärtigen Endbereich einen grösseren Aussendurchmesser aufweist als im vorderen Endbereich. Dadurch entspricht die Aussenkontur des Hülsenabschnitts im vorderen und im rückwärtigen Endbereich besser dem realen Verlauf der üblichen Bohrlöcher, die im Bereich der Bohrlochmündung einen grösseren Durchmesser aufweisen als im Bereich des Bohrlochgrunds. Auf diese Weise liegt der Hülsenabschnitt insbesondere in ihrem rückwärtigen Endbereich besser an der Bohrlochwand an. Das Spiel zwischen dem Hülsenabschnitt und Bohrlochwand ist minimiert. Dadurch kann der Hülsenabschnitt bei Belastung auftretende Querkräfte besser an die Umgebung ableiten, und der Dübel weist eine bessere Dynamiktauglichkeit auf. Indem der Hülsenabschnitt einen verjüngten Mittenbereich aufweist, können geringfügig krumme Verläufe eines Bohrlochs besser ausgeglichen werden. Der Hülsenabschnitt liegt während des Setzvorgangs nur im vorderen und im hinteren Endbereich an der Bohrlochwand an. Dadurch ist die Reibung zwischen der Aussenwand des Hülsenabschnitts und der Bohrlochwand reduziert, was sich vorteilhaft auf die erforderlichen Setzkräfte beim axial schlagenden und/oder beim rotierenden Eintreiben des Hülsenabschnitts auswirkt. Der Dübel ist daher leichter und schneller im Untergrund verankerbar. Die Gefahr eines unvollständigen Aufspreizens des Spreizbereichs infolge übergrosser erforderlicher Setzkräfte ist reduziert. Der Hülsenabschnitt kann ein Bestandteil der den Spreizbereich aufweisenden Hülse sein und einstückig an den Speizbereich angeformt sein. Der Hülsenabschnitt kann auch als separate Querlasthülse ausgebildet sein, die im Anschluss an die mit dem Spreizbereich versehene Hülse auf die Ankerstange aufsteckbar ist.

Eine besonders gute Anpassung an den üblicherweise leicht konischen Verlauf des Bohrlochs ergibt sich, wenn der Hülsenabschnitt im rückwärtigen Endbereich einen grössten Aussendurchmesser und im vorderen Endbereich einen kleinsten vorderen Aussendurchmesser aufweist, für deren Verhältnis gilt 1 < G/F < 1,3, vorzugsweise 1 < G/F < 1,1.

In einer vorteilhaften Variante der Erfindung weist der Hülsenabschnitt im vorderen Endbereich einen kleinsten vorderen Aussendurchmesser auf, für dessen Verhältnis zum geringsten Aussendurchmesser im mittleren Hülsenbereich gilt 1 < F/M < 1,5, vorzugsweise 1 < F/M < 1,3. Auf diese Weise ist sichergestellt, dass der mittlere Hülsenbereich auch bei Bohrlöchem mit krummem Verlauf nicht in Kontakt mit der Bohrlochwand kommt. Dadurch können beim Setzen des Dübels die Reibungsverluste zwischen dem Mantel des Hülsenabschnitts und der Bohrlochwand klein gehalten werden.

Für die dynamische Belastbarkeit des erfindungsgemässen Dübels erweist es sich von Vorteil, dass der Hülsenabschnitt eine axiale Gesamtlänge aufweist, für die gilt 2·G ≤ l ≤ 16·G, vorzugsweise 3·G ≤ l ≤ 10·G, wobei G den grössten Aussendurchmesser des Hülsenabschnitts bezeichnet.

Für die Einleitung von Querkräften in den umgebenden Untergrund erweist es sich von Vorteil, wenn der Hülsenabschnitt eine möglichst flächige Anlage zur Bohrlochwand aufweist. Dazu weist der rückwärtige Endbereich des Hülsenabschnitts eine axiale Länge auf, für die gilt 0,25·G ≤ r ≤ 10·G, vorzugsweise 0,5·G ≤ r ≤ 6·G, wobei G den grössten Aussendurchmesser des Hülsenabschnitts bezeichnet, und besitzt der rückwärtige Endbereich eine in Setzrichtung kegelstumpfförmig verjüngte Aussenkontur.

Damit der Dübel auch im vorderen, an den Spreizbereich angrenzenden Abschnitt eine möglichst flächige Abstützung an der Bohrlochwand besitzt, weist der vordere Endbereich des Hülsenabschnitts eine axiale Länge auf, für die gilt 0,25·G ≤ v ≤ 6·G, vorzugsweise 0,5·G ≤ v ≤ 4·G, wobei G den grössten Aussendurchmesser des Hülsenabschnitts bezeichnet. Vorzugsweise besitzt dabei der vordere Endbereich des Hülsenabschnitts eine in Setzrichtung kegelstumpfförmig verjüngte Aussenkontur.

Für die im wesentlichen flächige Anlage der kegelstumpfförmigen rückwärtigen und vorderen Endbereiche des Hülsenabschnitts erweist es sich vorteilhaft, wenn die Mantelflächen der kegelstumpfförmigen Bereiche jeweils mit der Achse des Hülsenabschnitts einen Winkel einschliessen, der zwischen etwa 0,1° und etwa 3,3°, vorzugsweise zwischen 0,2° und 0,9°, beträgt.

In einer weiter optimierten Variante des erfindungsgemässen Dübels ist die Mantelfläche des vorderen Endbereichs in geradliniger Verlängerung der Mantelfläche des rückwärtigen Endbereichs angeordnet. Auf diese Weise ergibt sich eine fiktive einhüllende Mantelfläche, die sich vom grössten Aussendurchmesser im rückwärtigen Endbereich zum kleinsten vorderen Aussendurchmesser im vorderen Endbereich erstreckt, einen kegelstumpfförmigen Verlauf aufweist und mit der Achse des Hülsenabschnitts einen Winkel einschliesst, der zwischen etwa 0,1° und etwa 3,3°, vorzugsweise zwischen 0,2° und 0,9°, beträgt.

In einer Variante der Erfindung weist der mittlere Hülsenbereich eine sich in Setzrichtung konisch verjüngende Aussenkontur auf. Derart ausgebildet, setzt sich der Hülsenabschnitt im wesentlichen aus drei konischen Bereichen zusammen. Dabei verändert sich beim Übergang von einem Hülsenbereich zum in Setzrichtung folgenden Bereich der Aussendurchmesser der Hülse sprunghaft.

In einer alternativen Ausführungsvariante besitzt der mittlere Hülsenbereich eine konkave Aussenkontur. In diesem Fall verändert sich der Aussendurchmesser am Übergang der einzelnen Hülsenbereiche nicht sprunghaft. Vielmehr nimmt er in den beiden konischen Endbereichen gemäss der konischen Aussenkontur stetig ab. Im mittleren Hülsenbereich beginnt der Aussendurchmesser am kleineren Aussendurchmesser des rückwärtigen Bereichs und verringert sich bis zu demjenigen Bereich in dem der mittlere Hülsenbereich den geringsten Aussendurchmesser aufweist. Vom Bereich mit dem geringsten Durchmesser aus vergrössert sich der Aussendurchmesser wieder, um schliesslich in den grösseren Aussendurchmesser des vorderen Endbereichs überzugehen. Dabei ist jedoch der grössere Durchmesser des vorderen Endbereichs kleiner als der kleinere Aussendurchmesser des rückwärtigen Endbereichs. Auf diese Weise erhält der mittlere Hülsenbereich eine konische Gestalt, der eine gekrümmt-taillierte Aussenkontur-überlagert ist.

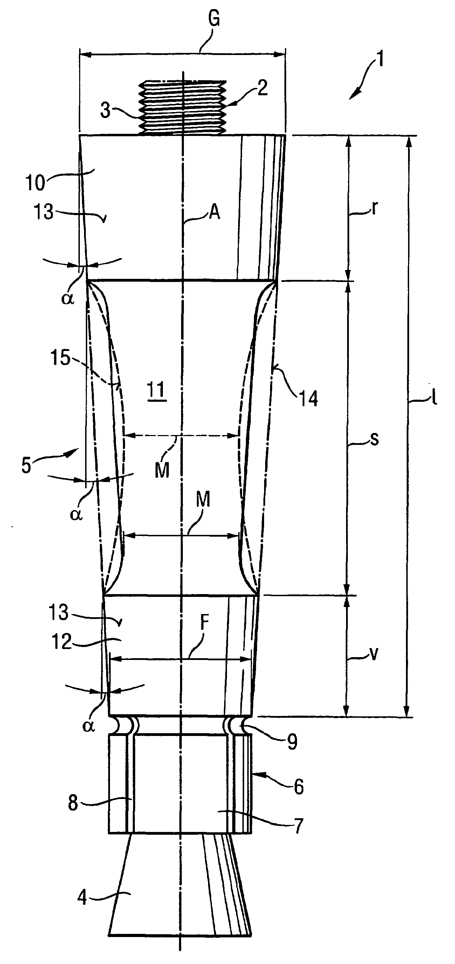

Im folgenden wird die Erfindung unter Bezugnahme auf ein schematisch dargestelltes Ausführungsbeispiel näher erläutert. Der in der einzigen Figur beispielhaft dargestellte erfindungsgemässe Dübel ist gesamthaft mit dem Bezugszeichen 1 versehen ist. Der Dübel 1 umfasst eine Ankerstange 2, die an ihrem rückwärtigen Bereich mit einem Aussengewinde 3 als Lastangriffsmittel versehen ist. Am gegenüberliegenden Ende ist die Ankerstange 2 mit einem Kopfteil 4 ausgestattet, das sich in Setzrichtung etwa konusförmig erweitert. Eine mit einer axialen Durchgangsbohrung versehene Hülse 5 ist auf die Ankerstange 2 aufgeschoben. Die Hülse 5 besitzt an ihrem dem Kopfteil 4 zugewandten vorderen Ende einen Spreizbereich 6. Der Spreizbereich 6 wird von Spreizlappen 7 gebildet, die durch im wesentlichen axial verlaufende Schlitze 8 voneinander getrennt sind und sich von einem plastischen Gelenk 9 zum freien Vorderende der Hülse 5 erstrecken. Indem die Hülse 5 axial gegen das Kopfteil 4 verschoben wird, sind die Spreizlappen 7 radial ausstellbar. Beispielsweise handelt es sich bei dem erfindungsgemässen Dübel um einen Hinterschnittdübel, der sich beim schlagendrotierenden Auftreiben des Spreizbereichs 6 auf das konische Kopfteil 4 selbsttätig im Bereich des Bohrlochgrunds eine Hinterschneidung erzeugt.

An den Spreizbereich 6 der Hülse 5 schliesst ein Hülsenabschnitt an, der sich von einem rückwärtigen Endbereich 10 der Hülse 5 zu einem vorderen Endbereich 12, der an den Spreizbereich 6 anschliesst, im wesentlichen konisch verjüngt. Zwischen dem rückwärtigen Endbereich 10 und dem vorderen Endbereich 12 des Hülsenabschnitts ist ein mittlerer Hülsenbereich 11 vorgesehen. Der Hülsenabschnitt weist eine axiale Gesamtlänge I auf, für die gilt 2·G ≤ l ≤ 16·G, vorzugsweise 3·G ≤ l ≤ 10·G, wobei G einen grössten Aussendurchmesser des Hülsenabschnitts im rückwärtigen Endbereich 10 bezeichnet. Dabei entspricht G im wesentlichen dem Durchmesser des Bohrers, mit dem das Bohrloch für einen erfindungsgemässen Dübel 1 mit dem erforderlichen Anschlussdurchmesser der Ankerstange 2 erstellt wird. Der mittlere Hülsenbereich 11 besitzt einen geringsten mittleren Aussendurchmesser M, der kleiner ist als ein kleinster Aussendurchmesser F im vorderen Endabschnitt 12. Aus Gründen der besseren Verdeutlichung sind die kombinierte Konizität und Taillierung des Hülsenabschnitts in der einzigen Figur stärker angedeutet als es der Realität entspricht. Für den grössten Aussendurchmesser G im rückwärtigen Endbereich 10 und den kleinsten vorderen Aussendurchmesser F im vorderen Endbereich 12 gilt ein Verhältnis von 1 < G/F < 1,3, vorzugsweise 1 < G/F < 1,1. Für das Verhältnis des kleinsten Aussendurchmessers F und des geringsten Aussendurchmessers M im mittleren Hülsenbereich 11 gilt 1 < F/M < 1,5, vorzugsweise 1 < F/M < 1,3.

Der rückwärtige Endbereich 10 des Hülsenabschnitts weist eine axiale Länge r auf, für die gilt 0,25·G ≤ r ≤ 10.G, vorzugsweise 0,5·G ≤ r ≤ 6·G. Dabei besitzt der rückwärtige Endbereich 10 eine in Setzrichtung kegelstumpfförmig verjüngte Aussenkontur. Vorzugsweise schliesst die Mantelfläche 13 mit der Achse A der Hülse 5 einen Winkel α ein, der zwischen etwa 0,1° und etwa 3,3°, vorzugsweise zwischen 0,2° und 0,9°, beträgt. Der vordere Endbereich 12 des Hülsenabschnitts besitzt eine axiale Länge v, für die gilt 0,25·G ≤ v ≤ 6·G, vorzugsweise 0,5·G ≤ v ≤ 4·G. Seine Aussenkontur ist vorzugsweise derart in Setzrichtung konisch verjüngt ausgebildet, dass seine Mantelfläche 13 mit der Achse A der Hülse 5 einen Winkel α einschliesst, der zwischen etwa 0,1 ° und etwa 3,3°, vorzugsweise zwischen 0,2° und 0,9°, beträgt. Die Konizität des rückwärtigen Endbereichs 10 und des vorderen Endbereichs 12 verläuft mit Vorteil derart, dass die Mantelfläche 13 des vorderen Endbereichs 12 eine Verlängerung der Mantelfläche 13 des rückwärtigen Endbereichs 10 bildet. Eine auf diese Weise gebildete, fiktive einhüllende Mantelfläche 14 schliesst mit der Achse A der Hülse 5 einen Winkel α ein, der gleichfalls zwischen etwa 0,1° und etwa 3,3°, vorzugsweise zwischen 0,2° und 0,9°, beträgt.

Der mittlere Hülsenbereich 11 besitzt eine axiale Länge s, die sich aus der Differenz der Gesamtlänge I und der Längen r und v des rückwärtigen und des vorderen Endbereichs 10 und 12 des Hülsenabschnitts ergibt. Für die Aussenkontur des mittleren Hülsenbereichs 11 bestehen zwei Varianten, die in der Figur angedeutet sind. Die mit durchgehenden Strichen dargestellte Aussenkontur ist kegelstumpfförmig. Der Neigungswinkel der Mantelfläche im mittleren Hülsenbereich 11 kann dabei dem Neigungswinkel α der Mantelflächen 13 des rückwärtigen und des vorderen Endbereichs 10 und 12 entsprechen. Der geringste mittlere Aussendurchmesser M des mittleren Hülsenbereichs 11 ist in dieser Variante in unmittelbarer Nachbarschaft zum vorderen Endbereich 12 angeordnet. Eine zweite Variante der Aussenkontur 15 des mittleren Hülsenbereichs 11 ist in der Figur strichliert angedeutet. In diesem Fall nimmt der Aussendurchmesser am Übergang der einzelnen Hülsenbereiche 10, 11, 12 nicht sprunghaft ab. Der Aussendurchmesser des mittleren Hülsenbereichs 11 beginnt an einem kleineren Aussendurchmesser am Übergang zum rückwärtigen Endbereich 10 und verringert sich bis zum geringsten Aussendurchmesser M des mittleren Hülsenbereichs 11. Von dort vergrössert sich der Aussendurchmesser wieder, um schliesslich in einen grösseren Aussendurchmesser am Übergang zum vorderen Endbereich 12 überzugehen. Dabei ist jedoch der grössere Durchmesser des vorderen Endbereichs 12 kleiner als der kleinere Aussendurchmesser des rückwärtigen Endbereichs 10. Auf diese Weise erhält der mittlere Hülsenbereich 11 eine konische Gestalt, der eine gekrümmt taillierte Aussenkontur 15 überlagert ist. Die konisch taillierte Aussenkontur 15 des mittleren Hülsenbereichs 11 muss nicht notwendigerweise eine Kreisbogenform besitzen. Sie kann beispielsweise auch durch eine Aneinanderreihung von kegelstumpfförmigen Abschnitten angenähert sein.

Der erfindungsgemässe Dübel wurde am Beispiel eines selbstschneidenden Hinter schnittdübels mit einer einstückig ausgebildeten Hülse erläutert. Es versteht sich, dass die Hülse auch zweiteilig ausgebildet sein kann, mit einer vorderen Hülse, die den Spreizbereich aufweist, und einer daran anschliessenden Querlasthülse. Die Ausbildung des Dübels ist auch nicht auf Hinterschnittsysteme beschränkt. Vielmehr kann die erfindungsgemässe, konisch-taillierte Hülsengeometrie auch bei Spreizankem zur Anwendung kommen.

## Patentansprüche

1. Dübel umfassend eine Ankerstange (2) mit einem sich in Setzrichtung erweitemrnden Kopfteil (4) und eine mit einer axialen Durchgangsbohrung versehenen Hülse (5), die an ihrem dem Kopfteil (4) zugewandten Ende einen Spreizbereich (6) mit Spreizlappen (7) aufweist, die durch im wesentlichen axial verlaufende Schlitze (8) voneinander getrennt und durch Relativverschieben der Hülse (5) und der Ankerstange (2) radial ausstellbar sind, wobei ein an den Spreizbereich (6) anschliessender Hülsenabschnitt vorgesehen ist, der zwischen seinem rückwärtigen Endbereich (10) und seinem an den Spreizbereich (6) angrenzenden vorderen Endbereich (12) einen mittleren Hülsenbereich (11) aufweist, der verjüngt ausgebildet ist und einen geringsten Aussendurchmesser (M) besitzt, der kleiner ist als der Aussendurchmesser (F) im vorderen Endbereich (12), **dadurch gekennzeichnet, dass** der Hülsenabschnitt an dem rückwärtigen Endbereich (10) einen grösseren Aussendurchmesser (G) aufweist als an dem vorderen Endbereich (12).

2. Dübel nach Anspruch 1, **dadurch gekennzeichnet, dass** der Hülsenabschnitt im rückwärtigen Endbereich (10) einen grössten Aussendurchmesser (G) und im vorderen Endbereich (12) einen kleinsten vorderen Aussendurchmesser (F) aufweist, für deren Verhältnis gilt 1 < G/F < 1,3, vorzugsweise 1 < G/F < 1,1.

3. Dübel nach Anspruch 1 oder 2, **dadurch gekennzeichnet, dass** der Hülsenabschnitt im vorderen Endbereich (12) einen kleinsten vorderen Aussendurchmesser (F) aufweist, für dessen Verhältnis zum geringsten Aussendurchmesser (M) im mittleren Hülsenbereich (11) gilt 1 < F/M < 1,5, vorzugsweise 1 < F/M < 1,3.

4. Dübel nach einem der vorangehenden Ansprüche, **dadurch gekennzeichnet, dass** der Hülsenabschnitt eine axiale Gesamtlänge (l) aufweist, für die gilt 2·G ≤ l ≤ 16·G, vorzugsweise 3·G ≤ l ≤ 10·G, wobei G den grössten Aussendurchmesser des Hülsenabschnitts bezeichnet.

5. Dübel nach einem der vorangehenden Ansprüche, **dadurch gekennzeichnet, dass** der rückwärtige Endbereich (10) des Hülsenabschnitts eine axiale Länge (r) aufweist, für die gilt 0,25·G ≤ r ≤ 10·G, vorzugsweise 0,5·G ≤ r ≤ 6·G, wobei G den grössten Aussendurchmesser des Hülsenabschnitts bezeichnet und der rückwärtige Endbereich (10) eine in Setzrichtung kegelstumpfförmig verjüngte Aussenkontur aufweist.

6. Dübel nach einem der vorangehenden Ansprüche, **dadurch gekennzeichnet, dass** der an den Spreizbereich (6) anschliessende vordere Endbereich (12) des Hülsenabschnitts eine axiale Länge (v) aufweist, für die gilt 0,25·G ≤ v ≤ 6·G, vorzugsweise 0,5·G ≤ v ≤ 4·G, wobei G den grössten Aussendurchmesser des Hülsenabschnitts bezeichnet und der vordere Endbereich (12) eine in Setzrichtung kegelstumpfförmig verjüngte Aussenkontur aufweist.

7. Dübel nach einem der vorangehenden Ansprüche, **dadurch gekennzeichnet, dass** der rückwärtige Endbereich (10) und der vordere Endbereich (12) jeweils eine Mantelfläche (13) besitzen, die mit der Achse (A) des Hülsenabschnitts einen Winkel (α) einschliesst, der zwischen etwa 0,1° und etwa 3,3°, vorzugsweise zwischen 0,2° und 0,9°, beträgt.

8. Dübel nach Anspruch 7, **dadurch gekennzeichnet, dass** eine einhüllende Fläche (14), die sich vom grössten Aussendurchmesser (G) im rückwärtigen Endbereich (10) zum kleinsten vorderen Aussendurchmesser (F) im vorderen Endbereich (12) erstreckt, einen kegelstumpfförmigen Verlauf aufweist und mit der Achse (A) des Hülsenabschnitts einen Winkel (α) einschliesst, der zwischen etwa 0,1° und etwa 3,3°, vorzugsweise zwischen 0,2° und 0,9°, beträgt.

9. Dübel nach einem der Ansprüche 1 bis 7, **dadurch gekennzeichnet, dass** der mittlere Hülsenbereich (11) eine sich in Setzrichtung konisch verjüngende Aussenkontur aufweist.

10. Dübel nach einem der vorangehenden Ansprüche, **dadurch gekennzeichnet, dass** der mittlere Hülsenbereich (11) eine konkave Aussenkontur (15) aufweist.

## Claims

1. An anchor comprising an anchor rod (2) having a head portion (4), which widens in setting direction, as well as comprising a sleeve (5), provided with an axial through bore and having, at its end towards the head portion (4), an expansion zone (6) with expanding tabs (7), which are separated from one another by slots (8) running substantially in axial direction and which can be opened out in radial direction by relative displacement of the sleeve (5) and the anchor rod (2), a sleeve section being provided which adjoins the expansion zone (6) and which, between its rear end portion (10) and its front end portion (12) adjoining the expansion zone (6), has a central sleeve portion (11), which is tapered in form, its smallest external diameter (M) being smaller than the external diameter (F) of the front end portion (12), **characterized in that** the rear end portion (10) of the sleeve section has a larger external diameter (G) than that of the front end portion (12).

2. An anchor according to Claim 1, **characterized in that** the sleeve section has its largest external diameter (G) at the rear end (10) and its smallest external diameter (F) at the front of its front end portion (12), the ratio being 1 < G/F < 1.3, and preferably 1 < G/F < 1.1.

3. An anchor according to Claim 1 or 2, **characterized in that** the front end portion (12) of the sleeve has the smallest external diameter (F) at the front, the ratio relative to the smallest external diameter (M) in the central portion (11) of the sleeve being 1 < F/M < 1.5, and preferably 1 < F/M < 1.3.

4. An anchor according to one of the preceding claims, **characterized in that** the sleeve section has an overall length (1) in axial direction in respect of which the following applies: 2·G ≤1 ≤16·G, and preferably 3·G ≤ 1 ≤ 10·G, in which G represents the largest external diameter of the sleeve section.

5. An anchor according to one of the preceding claims, **characterized in that** the rear end portion (10) of the sleeve has an axial length (r) in respect of which the following applies: 0.25·G ≤ r ≤ 10·G, and preferably 0.5·G ≤ r ≤ 6·G, in which G represents the largest external diameter of the sleeve section, and the rear end portion (10) has an outer contour which tapers in setting direction so as to assume the shape of a truncated cone.

6. An anchor according to one of the preceding claims, **characterized in that** the front end portion (12) of the sleeve adjoining the expansion zone (6) has an axial length (v), in respect of which the following applies: 0.25·G ≤ v ≤ 6·G, and preferably 0.5·G ≤ v ≤ 4·G, in which G represents the largest external diameter of the sleeve section, and the front end portion (12) has an outer contour which tapers in setting direction so as to assume the shape of a truncated cone.

7. An anchor according to one of the preceding claims, **characterized in that** the rear end portion (10) and the front end portion (12) of the sleeve each have a surface (13) which forms an angle (α) with the axis (A) of said sleeve of between approximately 0.1° and approximately 3.3°, and preferably between 0.2° and 0.9°.

8. An anchor according to Claim 7, **characterized in that** an envelope surface (14), extending from the largest external diameter (G) of the rear end portion (10) to the smallest external diameter (F) at the front of the front end portion (12), takes the form of a truncated cone and forms an angle (α) with the axis (A) of the sleeve which is between approximately 0.1° and approximately 3.3°, and preferably between 0.2° and 0.9°.

9. An anchor according to one of Claims 1 to 7, **characterized in that** the central portion (11) of the sleeve has an outer contour which is tapered in setting direction.

10. An anchor according to one of the preceding claims, **characterized in that** the central portion (11) of the sleeve has a concave outer contour (15).

## Revendications

1. Cheville comprenant une tige d'ancrage (2) avec une partie de tête (4) s'élargissant dans la direction de scellement et avec un manchon (5) pourvu d'un trou axial débouchant et, à son extrémité tournée vers la partie de tête (4), d'une zone d'expansion (6) avec des pattes expansibles (7) qui sont séparées les unes des autres par des fentes sensiblement axiales (8) et sont déployables radialement par un déplacement relatif du manchon (5) et de la tige d'ancrage (2), une portion de manchon raccordée à la zone d'expansion (6) comportant, entre sa zone arrière extrême (10) et sa zone avant extrême (12) adjacente à la zone d'expansion (6), une zone centrale de manchon (11) qui est de conformation rétrécie et possède un diamètre extérieur minimal (M) qui est inférieur au diamètre extérieur (F) de la zone avant extrême (12), **caractérisée en ce que** la portion de manchon possède, dans la zone arrière extrême (10), un diamètre extérieur (G) supérieur à celui de la zone avant extrême (12).

2. Cheville selon la revendication 1, **caractérisée en ce que** la portion de manchon possède, dans la zone arrière extrême (10), un diamètre extérieur maximal (G) et, dans la zone avant extrême (12), un diamètre extérieur avant minimal (F) qui s'établissent dans un rapport de 1 < G/F < 1,3, de préférence 1 < G/F < 1,1.

3. Cheville selon la revendication 1 ou 2, **caractérisée en ce que** la portion de manchon possède, dans la zone avant extrême (12), un diamètre extérieur avant minimal (F) dont le rapport avec le diamètre extérieur minimal (M) dans la zone centrale de manchon (11) est de 1 < F/M < 1,5, de préférence 1 < F/M < 1,3.

4. Cheville selon une des revendications précédentes, **caractérisée en ce que** la portion de manchon possède une longueur axiale totale (1) telle que 2·G ≤ l ≤ 16·G, de préférence 3·G ≤ l ≤ 10·G, G désignant le diamètre extérieur maximal de la portion de manchon.

5. Cheville selon une des revendications précédentes, **caractérisée en ce que** la zone arrière extrême (10) de la portion de manchon possède une longueur axiale (r) telle que 0,25·G ≤ r ≤10·G, de préférence 0,5·G ≤ r ≤ 6·G, G désignant le diamètre extérieur maximal de la portion de manchon, et la zone arrière extrême (10) possédant un contour extérieur à rétrécissement tronconique dans la direction de scellement.

6. Cheville selon une des revendications précédentes, **caractérisée en ce que** la zone avant extrême (12) de la portion de manchon raccordée à la zone d'expansion (6) possède une longueur axiale (v) telle que 0,25·G ≤ v ≤ 6·G, de préférence 0,5·G ≤ v ≤ 4·G, G désignant le diamètre extérieur maximal de la portion de manchon, et la zone avant extrême (12) possédant un contour extérieur à rétrécissement tronconique dans la direction de scellement.

7. Cheville selon une des revendications précédentes, **caractérisée en ce que** la zone arrière extrême (10) et la zone avant extrême (12) possèdent chacune une surface périphérique (13) qui forme avec l'axe (A) de la portion de manchon un angle (α) compris entre environ 0,1° et environ 3,3°, de préférence entre 0,2° et 0,9°.

8. Cheville selon la revendication 7, **caractérisée en ce qu'**une surface enveloppante (14) qui s'étend du diamètre extérieur maximal (G) dans la zone arrière extrême (10) au diamètre extérieur avant minimal (F) dans la zone avant extrême (12), présente un tracé tronconique et forme, avec l'axe (A) de la portion de manchon, un angle (α) compris entre environ 0,1° et environ 3,3°, de préférence entre 0,2° et 0,9°.

9. Cheville selon une des revendications 1 à 7, **caractérisée en ce que** la zone centrale de manchon (11) possède un contour extérieur à rétrécissement conique dans la direction de scellement.

10. Cheville selon une des revendications précédentes, **caractérisée en ce que** la zone centrale de manchon (11) possède un contour extérieur concave (15).
